Europäisches Patentamt

European Patent Office

Office européen des brevets

(19)

(11) Numéro de publication: **0 009 606**

**B1**

(12) **FASCICULE DE BREVET EUROPEEN**

(45) Date de publication du fascicule du brevet: **27.01.82**

(21) Numéro de dépôt: **79103112.3**

(22) Date de dépôt: **23.08.79**

(51) Int. Cl.³: **H 02 J 7/10,** H 01 M 10/44, H 02 J 9/06, G 05 B 19/02

(54) **Dispositif de commande de charge d'une batterie d'accumulateurs.**

(30) Priorité: **30.08.78 FR 7824996**

(43) Date de publication de la demande: **16.04.80 Bulletin 80/8**

(45) Mention de la délivrance du brevet: **27.01.82 Bulletin 82/4**

(84) Etats contractants désignés: **AT BE CH DE FR GB IT LU NL SE**

(56) Documents cités: **FR - A - 1 600 361** **FR - A - 2 361 754**

(73) Titulaire: **Société Anonyme dite SAFT 156, avenue de Metz F-93230 Romainville (FR)**

(72) Inventeur: **Belot, Pierre 111, Allée Danièle Casanova F-93320 Pavillons S/Bois (FR)**

(74) Mandataire: **Weinmiller, Jürgen Zeppelinstrasse 63 D-8000 München 80 (DE)**

Courier Press, Leamington Spa, England.

Dispositif de commande de charge d'une batterie d'accumulateurs

La présente invention concerne un dispositif de commande de charge d'une batterie d'accumulateurs et plus particulièrement un dispositif qui permet la charge d'une batterie d'accumulateurs pendant un temps déterminé et seulement lorsque ladite batterie s'est déchargée pendant une période supéreure à un temps minimal.

Cette invention s'applique en particulier à la charge rapide d'une batterie de secours qui se décharge en l'absence du secteur. Il est bien connu dans ce cas de mesurer le temps de décharge de la batterie ou les ampères-heures déchargés, et de recharger ensuite la batterie pendant un temps fonction de la décharge précédente, à un régime relativement rapide, puis de passer au régime d'entretien ou de couper complètement la charge selon les cas. Les dispositifs employés pour cela sont relativement sophistiqués et coûteux. Dans certains cas il est possible de se contenter de donner une charge rapide fixe, par exemple à tension constante, et, pour éviter les trop fréquentes surcharges, de ne donner cette charge que lorsque la décharge précédente a dépassé un temps minimal.

Il est déjà connu d'utiliser dans ce but une première minuterie à réarmement automatique pour mesurer le temps de décharge et une seconde minuterie pour mesurer le temps de charge. Cette solution est onéreuse et la présente invention apporte une solution de ce problème avec un dispositif fiable et peu coûteux.

Elle a pour object un dispositif de commande de charge d'une batterie d'accumulateurs qui se décharge en l'absence du secteur, comprenent des premiers moyens pour détecter l'absence du secteur, des deuxièmes moyens pour comparer le temps d'absence du secteur à une première période, des troisièmes moyens pour mesurer une deuxième période pendant laquelle la batterie est rechargée à un régime donné et des quatriémes moyens pour agir sur les deuxièmes et troisièmes moyens en fonction de l'information donnée par les premiers moyens, caractérisé par le fait que les deuxièmes moyens consistent en une horloge et un premier compteur, les troisièmes moyens consistent en un deuxième compteur en série avec le premier, les quatrièmes moyens consistent en un premier opérateur logique qui reçoit une première information donnée par les premiers moyens et une deuxième information correspondand à l'état du second compteur et émet en conséquence une troisième information interdisant le fonctionnement de l'horloge lorsque le secteur est présent et que le second compteur est arrivé à un état donné et le permettant dans tous les autres cas, en un moyen de transmission de ladite première information au premier compteur, l'initialisant en l'absence du secteur et en un second opérateur logique qui reçoit la première information et une quatrième information correspondant à l'état du premier compteur et qui émet une cinquième information initialisant le second compteur lorsque le secteur est absent et que le premier compteur arrive à un état donné.

De cette manière lorsque le secteur disparaît et que la batterie commence à se décharger, 1'horloge est mise en fonctionnement et le premier compteur est initialisé, mais le second compteur n'est initialisé que lorsque le premier compteur arrive à un état donné, le temps qu'il met à arriver à cet état correspondant au temps minimal de décharge après lequel la batterie est remise en charge à un régime relativement rapide, c'est à dire supérieur au régime d'entretien. Lorsque le réseau revient l'horloge continue à fonctionner et les deux compteurs se remplissent. Quand le second compteur est arrivé à un état donné qui correspond au temps de charge de la batterie à un régime rapide, l'information de cet état, transmise au premier opérateur, et conjuguée avec l'information de la présence du secteur, amène l'arrêt de l'horloge.

L'invention sera mieux comprise à l'aide de la description qui va suivre d'une exemple de réalisation, en relation avec les dessins annexés:

La figure 1 représente le circuit d'alimentation du dispositif selon l'invention.

La figure 2 représente un schéma électrique d'une réalisation du dispositif selon l'invention.

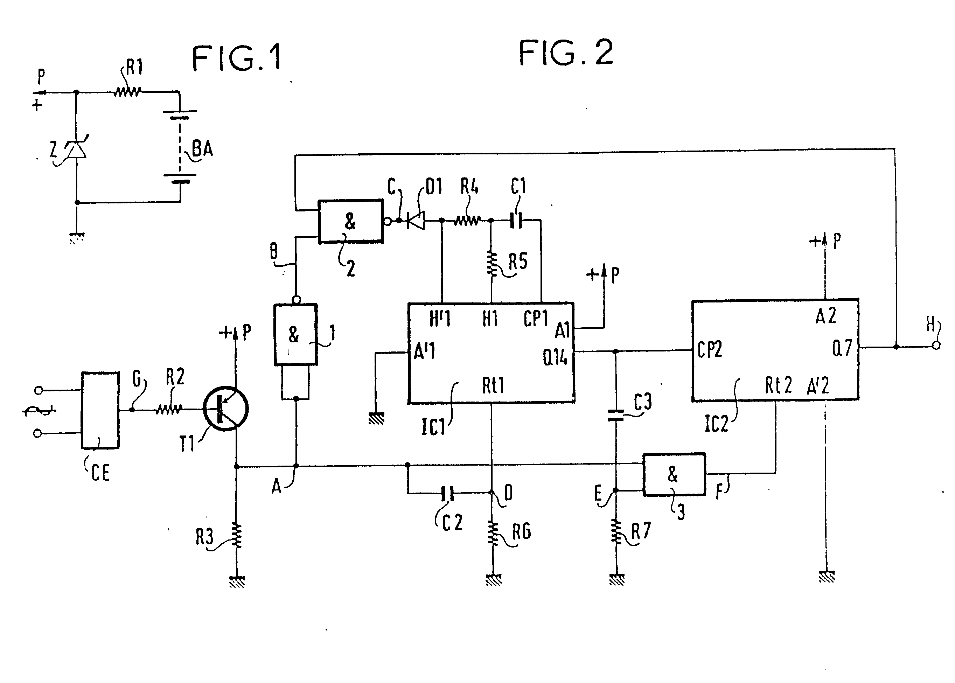

Sur la figure 1 on a représenté séparément l'alimentation du dispositif. Celle-ci est constituée par la batterie BA à charger, dont le pôle positif alimente un point P à travers une résistance R1 et le pôle négatif est relié à la masse. La tension fournie au dispositif par l'intermédiaire du point P est stabilisée par une diode de Zéner Z connectée entre ce point et le pôle négatif de la batterie.

Selon la figure 2 un point G est relié au secteur par un circuit CE qui applique en ce point un potentiel égal à celui du point P lorsque le secteur est présent et le potentiel O lorsque que celui-ci est absent. D'une manière générale, le potentiel du point P représente le niveau logique 1 pour les éléments du dispositif qui va être décrit et le potentiel de la masse représente le niveau logique 0.

Le point G est relié à travers une résistance R2 à la base d'un transistor pnp T1 dont l'émetteur est connecté au point P et le collecteur à la masse à travers une résistance R3, ainsi qu'à un point A directement. Le point A est relié aux entrées d'une porte NON-ET 1 montée en inverseur, dont la sortie B est connectée à une première entrée d'une porte NON-ET 2. La sortie C de cette porte 2 est reliée à travers une diode D1 d'une part au circuit oscillant d'une horloge comportant un condesateur C1 relié à l'anode de la diode D1 à travers une résistance R4 et d'autre part à une entrée CP1 d'un compteur IC1. Ce dernier est constitué par un circuit intégré de technique C-MOS, vendu par la Société RCA sous la référence CD 4060, cette entrée étant la borne n° 9 de ce circuit. Le point commun à l'anode de D1 et à la résistance R4 est relié à un point H'1 constitué par la borne n° 11 du compteur IC1, et le point commun au condensateur C1 et à la résistance R4 est relié à travers une resistance R5 à une point H1, constitué par la borne 10 de ce circuit intégré. Le reste de l'horloge est constitué par certains éléments du compteur IC1, qui comporte une entrée d'initialisation constituée par sa borne n° 12 et référencée Rt1. Cette entrée est connectée à un point D, lequel est connecté d'une part au point A à travers un condensateur C2 et d'autre part à la masse à travers une résistance R6. Les points A1 et A'1 (bornes n° 16 et 8) sont les entrées d'alimentation du compteur IC1 et reliées respectivement au point P et à la masse. Une sortie Q14 du compteur IC1 (borne n° 3) transmet les impulsions d'horloge à une entrée CP2 (borne n° 1) d'un compteur IC2, constitué par un circuit intégré de technique C-MOS, qui est vendu par la Société RCA sous la référence CD 4024 et dont les entrées d'alimentation A2 et A'2 (bornes n° 14 et 7) sont reliées respectivement au point P et à la masse. Une sortie Q14 (borne n° 3) du compteur IC1 est reliée à travers un condensateur C3 à un point E correspondant à une entrée d'une porte ET 3. Le point E est mis à la masse à travers une résistance R7.

La sortie F de la porte 3 est reliée à l'entrée Rt2 (borne n° 2) entrée d'initialisation du compteur IC2. Une sortie Q7 (borne n° 3) du compteur IC2 est reliée d'une part à un point H et d'autre part à la seconde entrée de la porte 2. Le point H est connecté au chargeur (non représenté) de la batterie BA, et permet ou interdit la charge rapide suivant son niveau logique.

La fonctionnement de ce dispositif est le suivant:

Lorsque le secteur est présent le transistor T1 est bloqué et le point A est au niveau 0. Le point B est donc au niveau 1. Supposons que la batterie BA soit à l'état chargé, la sortie Q7 (donc le point H) est au niveau 1. Lex deux entrées de la porte 2 étant au niveau 1, sa sortie C est au niveau 0 et la diode D1 bloque le fonctionnement de l'horloge les états logiques des sorties des compteurs IC1 et IC2 sont donc figés.

Lorsque le secteur disparaît, le transistor T1 se sature et le point A passe au niveau 1. Le point B est donc au niveau 0 et la sortie C de la porte 2 passe au niveau 1. L'horloge se met à osciller. Simultanément une impulsion parvient du point A à l'entrée Rt1 par D et initialise le compteur IC1. Celui-ci commence à se remplir.

Si le secteur reparaît avant que la sortie Q14 ait basculé au niveau 1, on se trouve ramené aux conditions précédentes: le compteur IC2 n'a pas changé d'état, le point H reste au niveau 1. La batterie BA n'est pas mise en charge, car il faut que le point H soit au niveau 0 pour permettre la charge de la batterie au régime supérieur au régime d'entretien.

Par contre si le secteur continue á être absent lorsque la sortie Q14 bascule au niveau 1 ce qui, dans le présent exemple correspond à la moitié du remplissage du compteur, le point E reçoit à travers le condensateur C3, une impulsion au niveau 1. Le point F passe brièvement au niveau 1 et l'entrée Rt 2 initialise le compteur IC2 dont la sortie Q7 passe au niveau 0, ce qui permet le passage du chargeur au régime supérieur.

Pendant tout le temps que le secteur reste absent le compteur IC1 continue à compter. Si ce temps est suffisant pout permettre le remplissage complet de ce compteur celui-ci revient à l'état 0, et recommence à compter. Au bout du temps voulu, le point Q14 bascule de 0 à 1, ce qui améne la remise à 0 du compteur IC2. Le compteur IC2 est donc périodiquement remis à 0. Cette remise à 0 a lieu avec une période double du temps de décharge minimal, puisque celui-ci correspond à la moitié du temps de remplissage du compteur IC1. Cette période est beaucoup plus faible que le temps de remplissage du compteur IC2, ce qui empêche que le point Q7 change d'état.

Lorsque le secteur revient, le point H est donc encore au niveau 0. La batterie BA est alors mise en charge au régime supérieur au régime d'entretien et reste en charge jusqu'à ce que le point H bascule au niveau 1. Le temps de charge rapide de la batterie correspond donc pratiquement au temps de remplissage du compteur IC2 qui constitue un temps maximal de charge. Le temps effectif de charge peut être diminué d'un temps inférieur au temps de remplissage du compteur IC1, celui-ci étant négligeable vis à vis de celui-là. Tant que le point H reste au niveau 0 le point C reste au niveau 1 quel que soit l'état du point B. L'horloge continue donc à fonctionner tant que le compteur IC2 ne s'est pas rempli et que le point Q7 n'atteint pas le niveau 1. Lorsque ce compteur est rempli le point H passe au niveau 1, ce qui arrête la charge rapide de la batterie et arrête aussi l'horloge.

Si le secteur disparaît à nouveau avant que le point H n'ait atteint le niveau 1, la nouvelle impulsion qui apparait au point D fait repartir le compteur IC1 de zéro. Quand le secteur revient, de deux choses l'une:

— ou bien le temps de disparition du secteur a été inférieur au temps minimal, Q14 n'a pas atteint le niveau 1, la charge de la batterie reprend au niveau où elle a été interrompue et le remplissage du compteur IC2 continue, la porte 3 empêchant sa remise à 0 en présence du secteur.

— ou bien le temps de disparition du secteur a été supérieur au temps minimal, Q14 a basculé au niveau 1 et le compteur IC2 a été remis à O. La charge rapide reprendra au retour du secteur, et durera le temps maximal.

Pour fixer les idées, quelques indications numériques vont être données à titre d'example.

Le temps minimal de décharge est 5 minutes qui sont atteintes au bout de $2^{13}$ impulsions d'horloge. Le compteur IC2 est remis au O toutes les 10 minutes pendant l'absence du secteur. Le temps de charge est 12 heures, ou plus exactement compris entre 12 heures et 12h moins 10 minutes.

Les circuits intégrés CD 4060 et CD 4024 de RCA utilisés dans le dispositif décrit peuvent être remplacés sans autres modifications par des circuits intégrés équivalents fournis par d'autres fabricants sous des références qui comportent également les n° 4060 et 4024. Alternativement les fonctions de ces circuits intégrés peuvent être remplies par d'autres composants moyennant le cas échéant des modifications des branchements.

La description ci-dessus peut être résumée de la manière suivante:

Dispositif de commande de charge d'une batterie d'accumulateurs que se décharge en l'absence du secteur, comportant:

— un circuit d'entrée (CE, T1) pour recevoir le secteur et fournir un signal représentatif de la présence ou de l'absence du secteur,
— des moyens de comparaison entre la durée d'absence du secteur, et une première durée prédéterminée constituant un "temps minimal de décharge",
— et des moyens de commande de charge pour fournir un signal de commande de charge à une borne de sortie (H) qui commande un chargeur de batterie alimenté par le secteur, et pour commander ainsi la charge de la batterie à un régime rapide pendant une deuxième durée prédéterminée lorsque le circuit d'entrée détecte le retour du secteur et lorsque lesdits moyens de comparaison ont détecté une durée d'absence du secteur supérieure à la première durée prédéterminée, caractérisé par le fait que ces moyens de comparaison et de commande comportent:
— une horloge (IC1, C1, R4, R5) pour délivrer des impulsions d'horloge,
— un circuit logique de commande d'horloge (2) connecté au circuit d'entrée (CE, T1) et à la borne de sortie (H) pour faire fonctionner l'horloge si le secteur est absent ou si le signal de commande de charge est fourni,
— un premier compteur (IC1) recevant les impulsions d'horloge et commandé par le circuit d'entrée (CE, T1) de manière à compter les impulsions d'horloge à partir de zéro quand le secteur disparait, ce compteur fournissant un signal "d'autorisation de charge" lorsqu'il a compté un premier nombre prédéterminé représentant un "temps minimal de décharge" et repartant à zéro lorsqu'il a compté un deuxième nombre prédéterminé supérieur au premier,
— un deuxiéme compteur (IC2) recevant les impulsions d'horloge et propre à compter un troisième nombre supérieur au deuxième et représantant un "temps maximal de charge", ce compteur fournissant ledit signal de commande de charge à la borne de sortie dés qu'il est en marche et tant qu'il n'a pas compté ce troisième nombre prédéterminé,
— et un circuit logique (3) connecté au circuit d'entrée (CE, T1) et au premier compteur (IC1) et commandant le deuxième compteur de manière à le faire compter à partir de zéro si le secteur est absent quand le premier compteur fournit le signal d'autorisation de charge.

**Revendications**

1. Dispositif de commande de charge d'une batterie d'accumulateurs qui se décharge en l'absence du secteur, comprenant des premiers moyens (CE, T1) pour détecter l'absence du secteur, des deuxièmes moyens (IC1) pour comparer le temps d'absence du secteur à une première période, des troisièmes moyens (IC2) pour mesurer une deuxième période pendant laquelle la batterie est rechargée à un régime donné et des quatrièmes moyens (2, 3) pour agir sur les deuxièmes (IC1) et troisièmes moyens (IC2) en fonction de l'information donnée par les premiers moyens, (CE, T1) caractérisé par le fait que les deuxièmes moyens consistent en un premier compteur (IC1) et une horloge (C1, R4, R5, IC1), les troisièmes moyens consistent en un deuxième compteur (IC2) en série avec le premier, les quatrièmes moyens consistent en un premier opérateur logique (2) qui reçoit une première information donnée par les premiers moyens (CE, T1) et une deuxième information correspondant à l'état du second compteur (IC2) et émet en conséquence une troisième information interdistant le fonctionnement de l'horloge lorsque le secteur est présent et que le second compteur est arrivé à un état donné et le permettant dans tous les autres cas, en un moyen de transmission (C2) de ladite première information au premier compteur, l'initialisant en l'absence du secteur et en un second opérateur logique (3) qui reçoit la première information et une quatrième information correspondant à l'état du premier compteur et qui émet une cinquième information initialisant le second compteur lorsque le secteur est absent et que le premier compteur arrive à un état donné.

2. Dispositif selon la revendication 1 caractérisé par le fait que les premiers moyens comportent un circuit (CE) commandant un transistor (T1) qui est bloqué en présence du secteur et passent, en l'absence du secteur.

3. Dispositif selon l'une des revendications 1 et 2 caractérisé par le fait que la première information consiste en la mise d'un point (A) à un premier niveau de potentiel l'absence du secteur et à un second niveau de potentiel en la présence du secteur.

4. Dispositif selon la revendication 3 caractérisé par le fait que le premier niveau du potentiel représente le niveau 1 pour les compteurs et les opérateurs logiques et que le second niveau de potentiel represésente le niveau 0.

5. Dispositif selon l'une des revendications 3 et 4 caractérisé par le fait que le premier opérateur logique (2) est une porte NON-ET qui a une première entrée reliée audit point (A) par l'intermédiaire d'un inverseur (1), une deuxième entrée reliée à une sortie (Q7) du second compteur (IC2), et une sortie (C) reliée à l'horloge (C1, R4, R5, IC1) par l'intermédiaire d'une diode (D1) qui interdit le passage du courant lorsque la sortie est au niveau 0.

6. Dispositif selon l'une des revendications 3 à 5 caractérisé par le fait que ledit point (A) est relié à travers un condensateur (C2) à l'entrée de remise à zéro du premier compteur (IC1).

7. Dispositif selon 1'une des revendications 3 à 6 caractérisé par le fait que le second opérateur logique (3) est une porte ET dont une entrée est connectée audit point (A) et l'autre entrée à une sortie (Q14) du premier compteur (IC1) à travers un condensateur (C3) et dont la sortie initialise le second compteur (IC2).

## Patentansprüche

1. Vorrichtung zur Steuerung der Aufladung einer Akkumulatorenbatterie, die sich in Abwesenheit von Netzspannung entlädt, mit ersten Mitteln (CE, T1), um den Ausfall der Netzspannung zu erkennen, mit zweiten Mitteln (IC1), um die Abwesenheitsdauer der Netzspannung mit einer ersten Periode zu vergleichen, mit dritten Mitteln (IC2), um eine zweite Periode zu messen während der die Batterie mit vorgegebenem Ladestrom wieder aufgeladen wird, und vierten Mitteln (2, 3), um in Abhängigkeit von der von den ersten Mitteln (CE, T1) gegebenen Information auf die zweiten (IC1) und dritten Mittel (IC2) einzuwirken, dadurch gekennzeichnet, daß die zweiten Mittel aus einem ersten Zähler (IC1) und einem Taktgeber (C1, R4, R5, IC1) bestehen, daß die dritten Mittel aus einem zweiten Zähler (IC2) in Serie mit dem ersten Zähler bestehen, daß die vierten Mittel aus einem ersten logischen Operator (2), der eine von den ersten Mitteln (CE, T1) gegebene Information und eine dem Zustand des zweiten Zählers (IC2) entsprechende Information zugeführt erhält und daraufhin eine dritte Information ausgibt, die den Betrieb des Taktgebers verhindert, wenn Netzspannung vorhanden ist und der zweite Zähler einen vorgegebenen Zustand erreicht hat, und den Betrieb in allen anderen Fällen erlaubt, aus einem Mittel (C2) zur Übertragung der ersten Information auf den ersten Zähler, das ihn in Abwesenheit der Netzspannung zurückstellt, und einem zweiten logischen Operator (3) bestehen, der die erst und eine vierte Information empfängt, die dem Zustand des ersten Zählers entspricht, und der eine fünfte Information ausgibt, die den zweiten Zähler zurückstellt, wenn keine Netzspannung vorhanden ist und der erste Zähler an einem vorbestimmten Zählzustand ankommt.

2. Vorrichtung nach Anspruch 1, dadurch gekennzeichnet, daß die ersten Mittel einen Schaltkries (CE) aufweisen, der einen Transistor (T1) steuert, der bei vorhandenem Netz blockiert und bei Abwesenheit des Netzes durchlässig ist.

3. Vorrichtung nach einem der Ansprüche 1 und 2, dadurch gekennzeichnet, daß die erste Information darin besteht, daß ein Punkt (A) auf einen ersten Potentialpegel in Abwesenheit des Netzes und auf einen zweiten Potentialpegel bei Vorhandensein des Netzes gesetzt wird.

4. Vorrichtung nach Anspruch 3, dadurch gekennzeichnet, daß der erste Pegel des Potentials dem Niveau 1 für die Zähler und die logischen Operatoren entspricht, und daß der zweite Pegel des Potentials dem Niveau 0 entspricht.

5. Vorrichtung nach einem der Ansprüche 3 und 4, dadurch dekennzeichnet, daß der erste logische Operator (2) ein NICHT-UND-Glied ist, dessen erster Eingang über einen Inverter (1) mit dem Punkt (A) verbunden ist, dessen zweiter Eingang mit einem Ausgang (Q7) des zweiten Zählers (IC2) und dessen Ausgang (C) über eine Diode (D1), die den Durchgang des Stroms verhindert, wenn der Ausgang sich auf dem Niveau 0 befindet, mit dem Taktgeber (C1, R4, R5, IC1) verbunden ist.

6. Vorrichtung nach einem der Ansprüche 3 bis 5, dadurch gekennzeichnet, daß der Punkt (A) über einen Kondensator (C2) mit dem Nullrücksetzungseingand des Zählers (IC1) verbunden ist.

7. Vorrichtung nach einem der Ansprüche 3 bis 6, dadurch gekennzeichnet, daß der zwiete logische Operator (3) ein UND-Glied ist, dessen einer Eingang mit dem Punkt (A) und dessen anderer Eingang mit einem Ausgang (Q14) des ersten Zählers (IC1) über einen Kondensator (C3) verbunden ist, und dessen Ausgang den zweiten Zähler (IC2) rückstellt.

## Claims

1. A device for controlling the charging of a storage battery which discharges when mains is absent, said device including first means (CE, T1) for detecting the absence of the mains, second means (IC1) for comparing the time during which the mains is absent with a first period, third means (IC2) for measuring a second period during which the battery is recharged at a given rate and fourth means (2, 3) for acting on the second (IC1) and third means (IC2) as a function of the data given by the first means (CE, T1), characterized in that the second means consist of a first counter (IC1) and a lock (C1, R4, R5, IC1), the third means consist of a second counter (IC2) in series with the first, the fourth means consist of a first logic operator (2) which receives first data given by the first means (CE, T1) and second data corresponding to the state of the second counter (IC2) and which consequently emits a third data which prevents the operation of the clock when the mains is supplied and when the second counter reaches a given state, said third data allowing the clock to operate in all the other cases, a means (C2) for transmitting said first data to the first counter, said means initializing it when no mains is present, and consist of a second logic operator (3) which receives the first data and a fourth data corresponding to the state of the first counter and which emits a fifth data which initializes the second counter when the mains is absent and when the first counter reaches a given state.

2. A device according to claim 1, characterized in that the first means consist of a circuit (CE) controlling a transistor (T1) which is cut off when the mains is supplied and conductive when no mains is supplied.

3. A device according to claim 1 or 2, characterized in that the first data consists in setting a point (A) to a first potential level when no mains is present and to a second potential level when mains is supplied.

4. A device according to claim 3, characterized in that the first potential level represents logic level 1 for logic counters and logic operators, and the second potential level represents logic level 0.

5. A device according to claim 3 or 4, characterized in that the first logic operator (2) is a NAND gate which has a first input connected to said point (A) via an inverter (1), a second input connected to an output (Q7) of the second counter (IC2) and an output (C) connected to the clock (C1, R4, R5, IC1) via a diode (D1) which prevents current from passing when the output is at logic level 0.

6. A device according to any one of claims 3 to 5, characterized in that said point (A) is connected via a capacitor (C2) to a reset-to-zero input of the first counter (IC1).

7. A device according to any one of claims 3 to 6, characterized in that the second logic operator (3) is an AND gate whose first input is connected to said point (A) and whose other input is connected to an output (Q14) of the first counter (IC1) via a capacitor (C3) and whose output initializes the second counter (IC2).

# FIG.1

# FIG.2

0 009 606